(19) **Europäisches Patentamt**

**European Patent Office**

**Office européen des brevets**

(11) **EP 1 162 548 A2**

(12) **EUROPEAN PATENT APPLICATION**

(43) Date of publication:
**12.12.2001 Bulletin 2001/50**

(51) Int Cl.[7]: **G06F 17/16**, G06F 7/52

(21) Application number: **01304853.3**

(22) Date of filing: **01.06.2001**

| (84) Designated Contracting States:<br>**AT BE CH CY DE DK ES FI FR GB GR IE IT LI LU MC NL PT SE TR**<br>Designated Extension States:<br>**AL LT LV MK RO SI** | (72) Inventors:<br>• **Cohen, Nir**<br>  **Tel-Aviv 64512 (IL)**<br>• **Vinitzky, Gil**<br>  **Azur 58014 (IL)** |
|---|---|
| (30) Priority: **05.06.2000 US 587616** | (74) Representative: **Flint, Adam**<br>**W.H. Beck, Greener & Co.,**<br>**7 Stone Buildings,**<br>**Lincoln's Inn**<br>**London WC2A 3SZ (GB)** |
| (71) Applicant: **DSP Group Ltd.**<br>**46120 Herzlia (IL)** | |

(54) **Complex multiplication dsp subarchitectures**

(57)     A microprocessor multiplication unit including a multiplication combinatorial logic unit having at least two input paths and at least one output path, at least one multiplexer arranged to provide input to the logic unit via one of the input paths, at least a first and a second register arranged to provide input to the multiplexer, and at least a third register arranged to provide input to the logic unit via another of the input paths.

Fig. 2

EP 1 162 548 A2

**Description**

The present invention relates to microprocessor architectures in general, and in particular to Digital Signal Processors (DSP) and complex multiplication subarchitectures therefor.

A Digital Signal Processor (DSP) is a special-purpose microprocessor that is designed to optimize digital signal processing tasks such as Fast Fourier Transformation (FFT) and digital filtering in support of applications such as image processing and speech recognition. DSP applications are typically characterized by real-time operation, high interrupt rates, and intensive numeric computations. In addition, DSP applications tend to be intensive in memory access operations and require the input and output of large quantities of data.

One of the main tasks of a DSP is to perform complex multiplication. For example, in an FFT operation a DSP executes the function:

$$A \cdot B = (A_R + iA_I)(B_R + iB_I) = (A_R B_R - A_I B_I) + i(A_R B_I + A_I B_R) \qquad \text{EQ.1}$$

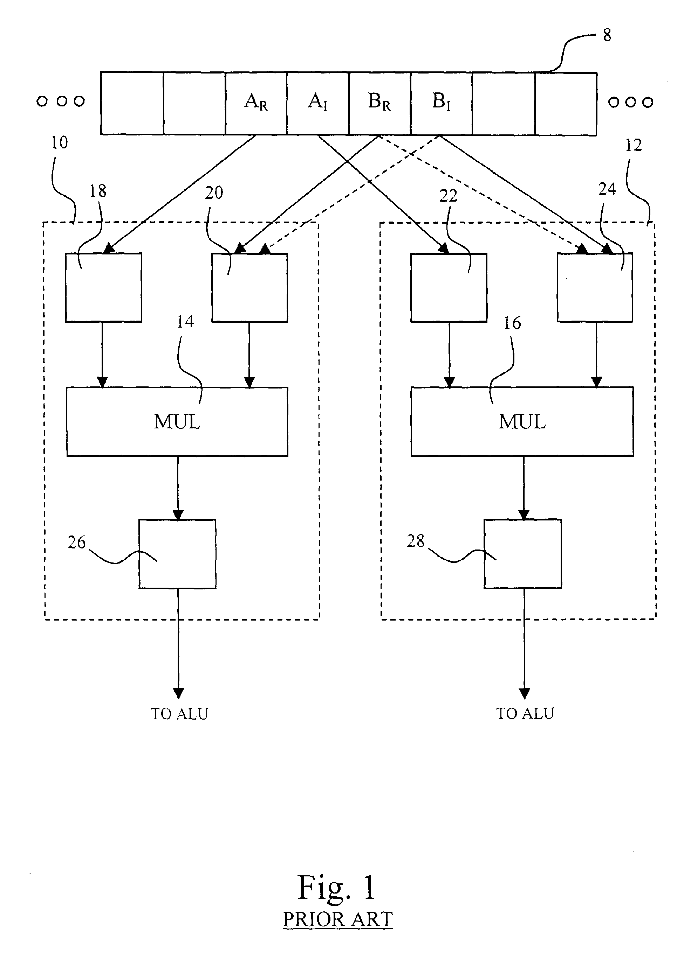

Fig. 1 is a simplified block diagram of a prior art multiplication subarchitecture that is adapted for performing complex multiplication in support of EQ. 1. Two multiplication units 10 and 12 are shown, each comprising a multiplication combinatorial logic unit (MUL) shown at 14 and 16. MUL 14 receives input from two registers 18 and 20, and MUL 16 receives input from two registers 22 and 24. MUL 14 and 16 provide one output each to registers 26 and 28 respectively, which generally provide input to arithmetic logic units (ALU) (not shown) for performing addition and subtraction operations.

Multiplication units 10 and 12 perform the complex multiplication operations of EQ. 1 by fetching the four data operands $A_R$, $B_R$, $A_I$, and $B_I$, such as from a memory 8, into registers 18, 20, 22, and 24 respectively. MUL 14 then retrieves $A_R$ and $B_R$ from registers 18 and 20 and multiplies $A_R$ by $B_R$, while MUL 16 retrieves $A_I$ and $B_I$ from registers 22 and 24 and multiplies $A_I$ by $B_I$. As two multiplication units are used, both multiplications $A_R B_R$ and $A_I B_I$ may be executed simultaneously in a single processing cycle. During the next processing cycle the data operands are again fetched from memory 8, with $A_R$ and $A_I$ occupying the same registers 18 and 22 as in the previous cycle. However, this time $B_R$ is fetched into register 24 and $B_I$ is fetched into register 20. MUL 14 then multiplies $A_R$ by $B_I$, and MUL 16 multiplies $A_I$ by $B_R$, with MUL 14 and MUL 16 again providing their multiplication results to registers 26 and 28 respectively. Although, logically speaking, $B_R$ and $B_I$ simply swap registers from one cycle to the next, all four data operands are physically fetched from memory 8 during both the first and second processing cycles.

The present invention seeks to provide an improved complex multiplication microprocessor subarchitecture that reduces the number of fetching operations required from one processing cycle to the next.

There is thus provided in accordance with a preferred embodiment of the present invention a microprocessor multiplication unit including a multiplication combinatorial logic unit having at least two input paths and at least one output path, at least one multiplexer arranged to provide input to the logic unit via one of the input paths, at least a first and a second register arranged to provide input to the multiplexer, and at least a third register arranged to provide input to the logic unit via another of the input paths.

There is also provided in accordance with a preferred embodiment of the present invention a microprocessor multiplication subarchitecture including at least a first and a second multiplication unit. each of the multiplication units including a multiplication combinatorial logic unit having at least two input paths and at least one output path, at least one multiplexer arranged to provide input to the logic unit via one of the input paths, at least a first register arranged to provide input to the multiplexer, and at least a second register arranged to provide input to the logic unit via another of the input paths,

the first register of the first multiplication unit is additionally arranged to provide input to the multiplexer of the second multiplication unit, and the first register of the second multiplication unit is additionally arranged to provide input to the multiplexer of the first multiplication unit.

The present invention will be understood and appreciated more fully from the following detailed description taken in conjunction with the appended drawings in which:

Fig. 1 is a simplified block diagram illustration of a prior art multiplication subarchitecture;
Fig. 2 is a simplified block diagram illustration of a multiplication subarchitecture constructed and operative in accordance with a preferred embodiment of the present invention.

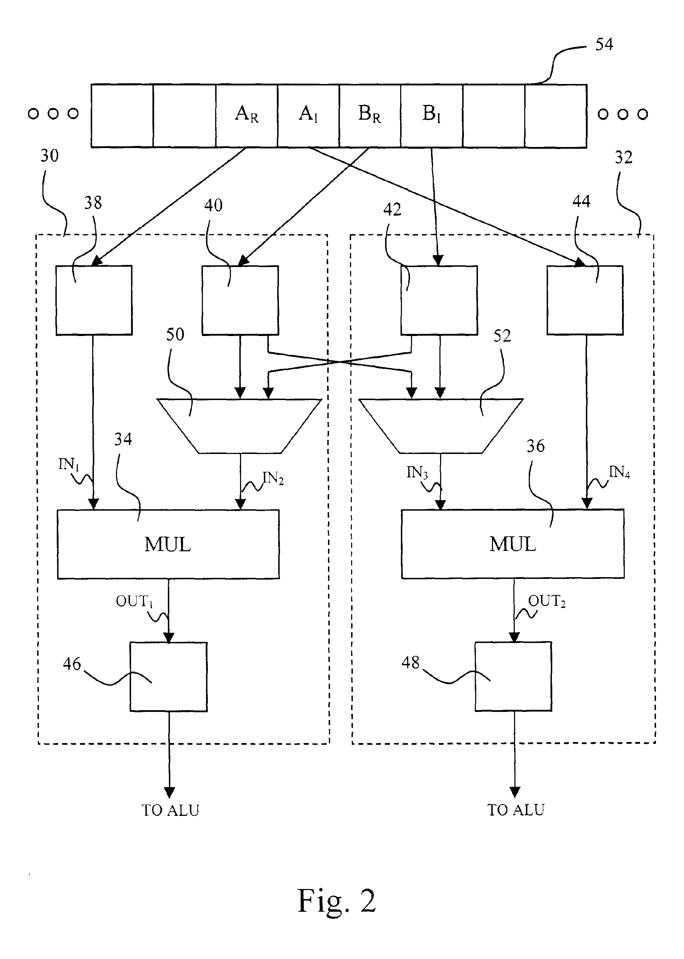

Reference is now made to Fig. 2 which is a simplified block diagram of a multiplication subarchitecture constructed and operative in accordance with a preferred embodiment of the present invention. The multiplication subarchitecture of Fig. 2 may be implemented in a variety of microprocessors in support of a variety of multiplication tasks, such as in a digital signal processor for carrying out complex multiplication in support of FFT. Two multiplication units 30 and 32 are shown in Fig. 2, each comprising a multiplication combinatorial logic unit (MUL) shown at 34 and 36. MUL 34 has at least two input paths $IN_1$ and $IN_2$ and at least one output path $OUT_1$, and MUL 36 has at least two input paths $IN_3$ and $IN_4$, and at least one output path $OUT_2$. MUL 34 is preferably configured to receive input from a register 38 along input path $IN_1$ and from a multiplexer 50 along input path $IN_2$. Multiplexer 50 is preferably configured to receive input from a register 40 and a register 42. MUL 36 is likewise preferably configured to receive input from a register 44 along input path $IN_3$ and from a multiplexer 52 along input path $IN_4$. Multiplexer 52 is preferably configured to receive input from registers 40 and 42. MUL 34 and 36 preferably provide at least one output each, such as to registers 46 and 48 along output paths $OUT_1$ and $OUT_2$ respectively, which generally provide input to arithmetic logic units (ALU) (not shown) for performing addition and subtraction operations.

Multiplication units 30 and 32 preferably perform the complex multiplication operations of EQ. 1 by fetching the four data operands $A_R$, $B_R$, $B_I$, and $A_I$ from a memory 54 and into registers 38, 40, 42, and 44 respectively. MUL 34 preferably retrieves $A_R$ from register 38 along input path $IN_1$. Multiplexer 50, being connected to both registers 40 and 42, preferably retrieves $B_R$ from register 40. Multiplexer 50 then provides $B_R$ to MUL 34 along input path $IN_2$ which multiplies $A_R$ by $B_R$ MUL 36 operates in a similar fashion to MUL 34, preferably retrieving $A_I$ from register 44 along input path $IN_4$. Multiplexer 52, being connected to both registers 40 and 42, preferably retrieves $B_I$ from register 42. Multiplexer 52 then provides $B_I$ to MUL 36 along input path $IN_3$ which multiplies $A_I$ by $B_I$. As two multiplication units are used, both multiplications $A_RB_R$ and $A_IB_I$ may be executed simultaneously in a single processing cycle, with the results being output along output paths $OUT_1$ and $OUT_2$ respectively, typically to registers 46 and 48 respectively.

During the next processing cycle MUL 34 again preferably retrieves $A_R$ from register 38 along input path $IN_1$. Multiplexer 50, having retrieved $B_R$ from register 40 during the previous processing cycle, preferably retrieves $B_I$ from register 42. Multiplexer 50 then provides $B_I$ to MUL 34 along input path $IN_2$ which multiplies $A_R$ by $B_I$ MUL 36 again operates in a similar fashion to MUL 34, preferably retrieving $A_I$ from register 44 along input path $IN_4$. Multiplexer 52, having retrieved $B_I$ from register 42 during the previous processing cycle, preferably retrieves $B_R$ from register 40. Multiplexer 52 then provides $B_R$ to MUL 36 along input path $IN_3$ which multiplies $A_I$ by $B_R$. MUL 34 and MUL 36 then provide their multiplication results $A_RB_I$ and $A_IB_R$ along output paths $OUT_1$ and $DUT_2$ respectively, typically to registers 46 and 48 respectively.

The multiplication subarchitecture of the present invention as shown in Fig. 2 is advantageous over prior art multiplication subarchitectures that support FFT in that it requires that the four data operands $A_R$ $B_R$, $B_I$, and $A_I$ be fetched from memory only once during the first of two processing cycles, and not twice during each of two processing cycles as is presently known in the art.

The methods and apparatus disclosed herein have been described without reference to specific hardware or software. Rather, the methods and apparatus have been described in a manner sufficient to enable persons of ordinary skill in the art to readily adapt commercially available hardware and software as may be needed to reduce any of the embodiments of the present invention to practice without undue experimentation and using conventional techniques. While the present invention has been described with reference to one or more specific embodiments, the description is intended to be illustrative of the invention as a whole and is not to be construed as limiting the invention to the embodiments shown. It is appreciated that various modifications may occur to those skilled in the art that, while not specifically shown herein, are nevertheless within the true spirit and scope of the invention.

**Claims**

1. A microprocessor multiplication unit comprising:

    a multiplication combinatorial logic unit having at least two input paths and at least one output path;
    at least one multiplexer arranged to provide input to said logic unit via one of said input paths;
    at least a first and a second register arranged to provide input to said multiplexer; and
    at least a third register arranged to provide input to said logic unit via another of said input paths.

2. A microprocessor multiplication subarchitecture comprising:

    at least a first and a second multiplication unit, each of said multiplication units comprising:

        a multiplication combinatorial logic unit having at least two input paths and at least one output path;
        at least one multiplexer arranged to provide input to said logic unit via one of said input paths;
        at least a first register arranged to provide input to said multiplexer; and
        at least a second register arranged to provide input to said logic unit via another of said input paths,

wherein said first register of said first multiplication unit is additionally arranged to provide input to said multiplexer of said second multiplication unit, and wherein said first register of said second multiplication unit is additionally arranged to provide input to said multiplexer of said first multiplication unit.

Fig. 1

PRIOR ART

Fig. 2